# EUROPEAN PATENT APPLICATION

(11) **EP 4 329 359 A1**
(43) Date of publication of application: **28.02.2024**
(21) Application number: 22382793.2
(22) Date of filing: 22.08.2022
(51) Int. Cl.: H04W 24/04, H04L 41/0631, H04W 24/08, H04L 41/0677, H04L 43/12, H04W 24/02

(54) **TELECOMMUNICATIONS NETWORK OPTIMISATION BASED ON CDR DATABASES**

(71) Applicant: Vodafone Group Services Limited, Newbury RG14 2FN (GB); Vodafone España, S.A.U., 28042 Madrid (ES)
(72) Inventor: CANABAL MUÑOZ, Juan Manuel, London, W2 6BY (GB); RODRIGUEZ TROMPETA, Santiago, London, W2 6BY (GB)
(74) Representative: Boult Wade Tennant LLP

(57) **Abstract**

Method and for optimising a cellular network that provides data services to a plurality of devices using two or more data communication protocols comprising: as the plurality of devices obtain data services from one or more cell sites of the cellular network, recording data indicating a cell site identifier and which of the two or more communication protocols is used to provide the data services to each device of the plurality of devices, wherein the two or more communication protocols comprise a higher bandwidth communication protocol and a lower bandwidth communication protocol. Determining a set of devices of the plurality of devices that obtain greater than a threshold proportion of data over a time period using a communication protocol other than the higher bandwidth communication protocol. Determining a cell site providing a highest volume of data during the time period for each device in the determined set of devices. Increasing the availability of the higher bandwidth communication protocol at one or more of the determined cell sites.

## Description

### Field of the Invention

The present invention relates to a system and method for optimising a telecommunications network and in particular, for identifying and fixing faults and defects that would otherwise result in sub-optimal data transfer speeds.

### Background of the Invention

Mobile devices obtain data services from a telecommunications network using several available communication protocols. Typically, a mobile device will use the highest data speed protocol available. However, in certain circumstances, a mobile device will have to make use of a low-speed protocol if a higher speed protocol cannot be used. For example, a mobile device may be equipped with 4G or 5G technology, but the nearest cell site may not be able to provide E-UTRA (4G) or 5G data services. In this case, the cell site may only be able to provide GERAN (2G) or UTRAN (3G) mobile connections to the mobile device. Whilst maintaining a data link, the data transfer speeds will be lower than available with the 4G or 5G service.

However, maintaining 4G or 5G service for every cell site in the telecommunications network may be difficult or impractical as faults cannot always be corrected quickly and hardware upgrades cannot be achieved universally across a network.

Systems exists to monitor how individual mobile devices access data. These require mobile users to install a mobile app on their device and then agree to send data usage and connection information to a network provider. For example, the My Vodafone app contains such functionality but may only be installed in a sub-set of users in a network. Mobile operators also receive complaints regarding a lack of high-speed connectivity in some areas. These can be used to fix faults and upgrade software hardware. However, these rely on customers notifying their service provide. It may be that a small number of customers file a large number of reports, which means that report statistics do not reliably inform the network operator regarding the location of the most significant data problems in their telecommunications network.

Therefore, there is required a method and system that overcomes these problems.

### Summary of the Invention

When a mobile device accesses a telecommunications network (usually via a base station or gNB) in order to obtain data or other services, a record, e.g., a call detail record (CDR) is generated and stored. One purpose of the CDR is to enable account holders to be charged correctly for the services that they obtain from the telecommunications network.

CDRs may comprise information identifying the subscriber (e.g., MSISDN), the device and device type (e.g., IMEI), the amount of data transmitted and/or received, the data bearer type (e.g., Edge, 2G, H+, 3G, 4g, 5G, etc.) used to provide the data, a base station or gNB identifier used at the download/upload time, and the record date and time. CDRs are stored within a node of the telecommunications network or external to it. Therefore, CDRs build up a record of devices, data volumes, transmission technology (i.e., communication protocol), and a base station or location. Devices may be identified by a particular subscriber identifier that is associated with the device (e.g., MSISDN), a device identifier (e.g., IMEI), other hardware identifiers (e.g., MAC address) or in any other suitable way. Identifying the device using the subscriber identifier enables them to be included during time periods when the subscribers changes their devices but retains the same subscription (e.g., when upgrading a handset).

Some devices will never use particular technologies, such as 4G or 5G, for data services. This may be because the devices do not contain the necessary hardware, does not have a subscriber plan for such services, or because the user never uses data services, for example. As a precaution, the method and system may only include or consider devices (identified by their particular subscriber identifier or MSISDN) that transfer (upload and/or download) at least some data (more than zero or 0.1 % of their total data consumption, for example) using a higher bandwidth communication protocol (e.g., 4G and/or 5G) over a particular period of time. The system and method determine (out of the original set of devices), which devices obtain above a threshold value (e.g., above 50%) of their total data (upload and/or download) at one or more lower bandwidth communication protocols (e.g., 2G or 3G) that has a bandwidth lower than the higher bandwidth technology (i.e., using older or a previous generation technology) over the same time period.

The system and method may consider one or more telecommunication communication protocols to be the higher or highest bandwidth communication protocol (e.g., 4G and/or 5G together), for example. Therefore, the proportion of the total data services provided to the device that is considered at the higher bandwidth communication protocol may be either or both 4G and 5G.

The system and method then have a list of devices that are able to access the higher bandwidth communication protocol(s) (at least during the particular time period) but nevertheless, are provided with an amount of their data services above a certain amount, threshold, or proportion, using a sub-optimal or a lower bandwidth data communication protocol.

For this group of devices, the CDRs also provide information regarding which cell sites provided their data. The cell site that provides the most data services to each of the identified device (i.e., that received over a threshold amount of data service below the higher bandwidth communication protocol) is added to a list of cell sites exhibiting similar behaviour. This set of cell sites can be targeted with immediate or longer-term enhancement(s) in order to increase the availability of the higher bandwidth communication protocol to these particular cell sites. The CDRs may be monitored in real time or retrieved after the end of the time period under consideration. The method may be repeated at intervals over different time periods have the same or different duration.

It is preferable for all personal information or data that identifies particular subscribers or their individual devices (such as MSISDN and IMEI) is secured by encryption, for example. Data may also be anonymised to avoid exposing sensitive information to external systems. Therefore, the data may be used to obtain reliable results without compromising security.

Against this background and in accordance with a first aspect there is provided a method for optimising a cellular network that provides data services to a plurality of devices using two or more data communication protocols, the method comprising the steps of:
as the plurality of devices obtain data services from one or more cell sites of the cellular network, recording data indicating a cell site identifier and which of the two or more communication protocols is used to provide the data services for each device of the plurality of devices, wherein the two or more communication protocols comprise a higher bandwidth communication protocol and a lower bandwidth communication protocol;
determining a set of devices of the plurality of devices that obtain greater than a threshold proportion of data over a time period using a communication protocol other than the higher bandwidth communication protocol;
determining a cell site providing a highest volume or majority of data during the time period for each device in the determined set of devices; and
increasing the availability of the higher bandwidth communication protocol at one or more of the determined cell sites. Therefore, the overall effectiveness of the cellular network can be improved and more devices are provided with a greater proportion of their data using higher performance protocols. Furthermore, limited higher performance resources can be deployed with more effectiveness and impact on the cellular network. A particular cell site or base station that provides the most data in the time period to a device might not necessarily provide a majority of its data. Therefore, the highest volume of data services provided is considered.

Increasing the availability of the higher bandwidth communication protocol at one or more of the determined cell sites may further comprise generating or updating a maintenance or upgrade schedule for cell sites in the cellular network. Therefore, the scheduling process can be automated and made more efficient and effective.

Optionally, increasing the availability of the higher bandwidth communication protocol at the one or more of the determined cell sites may comprise changing system parameters for the one or more determined cell sites. Therefore, this enables remote changes to the network to improve the delivery of higher performance resources.

Optionally, the method may further comprise the step of excluding cell sites having less than a predetermined number of devices that obtain less than the threshold proportion data over the time period using a communication protocol other than the higher bandwidth communication protocol. This reduces the contribution of errors to the method caused by cell sites that are lightly used and so may generate statistically insignificant results.

Preferably, the higher bandwidth communication protocol may be 4G or 5G. However, other communication protocols may be used, including further generation protocols beyond 5G.

Optionally, the threshold proportion of data may be any value between 35% and 65% and preferably 50%. Other suitable values or proportions may be used.

Preferably, the step of determining the cell site providing the highest volume of data during the time period for each device may further comprise determining that the cell site either lacks functionality to provide the higher bandwidth communication protocol or determining that this functionality is degraded. In some circumstances, a device may have received over the threshold proportion of total data services at the lower bandwidth protocol or protocols but still received the highest proportion of data services from a cell site that does provide higher or highest bandwidth data. For example, a device may move between three 2G cell sites, which each supply 20% of the devices data services but return to a 4G cell site (e.g., the subscriber's home cell site) supplying the remaining 40% or data services in the time period. The home cell site does not require maintenance, upgrading or any confirmation changes and so this additional step removes the home cell site from a list of cell sites to be investigated.

Optionally, the method may further comprise the step of excluding devices from the set of devices that obtain no data during the time period using the higher bandwidth communication protocol. Therefore, the effectiveness of the method may be further improved because results due to the relatively small number of devices that cannot access the higher bandwidth communication protocol (either because of their age or because of user account restrictions) that may skew the results, are excluded.

Optionally, the time period may be a day, a week or a month. Other time periods may be used.

Optionally, increasing the availability of the higher bandwidth communication protocol at the one or more of the determined cell sites comprises changing hardware at the one or more of the determined cell sites. This may be used as well as or instead of software or parameter changes, remote changes, and/or automated changes to the cellular system and/or cell sites.

Optionally, the step of recording the data may further comprise exporting the data from one or more database tables storing call records of the plurality of devices. These may be call data records (CDRs), for example.

Optionally, either or both of the determining steps may further comprise processing the exported data to generate a table of subscriber identifier, data amount for each communication protocol used to download data in the time period, and a proportion of downloaded data in the time period using the higher bandwidth communication protocol. Other ways of processing the data may be used.

Optionally, the data may be exported from data probes into a core network of the cellular network. The data may be derived from other sources.

Optionally, the step of increasing the availability of the higher bandwidth communication protocol at the one or more of the determined cell sites may further comprises the step of fixing one or more faults at the one or more of the determined cell sites. The faults may be fixed automatically as soon as they are detected or in batches. The faults may be fixed by changing settings or parameters within the cellular network (e.g., at the cell sites and/or base stations) or by other means, such as changing or fixing hardware, for example. Increasing the availability of the higher bandwidth communication protocol at the one or more of the determined cell sites may further include the incorporation of functionality within the cellular network to make it or parts of it a selforganising network (SON).

Optionally, the one or more faults may be hardware faults, software faults, and/or configuration faults. Other faults may be fixed in response to the method.

In accordance with a second aspect, there is provided a telecommunications network having means adapted to execute the steps of the described method.

The methods described above may be implemented as a computer program comprising program instructions to operate a computer. The computer program may be stored on a computer-readable medium.

The computer system may include a processor or processors (e.g. local, virtual or cloud-based) such as a Central Processing unit (CPU), and/or a single or a collection of Graphics Processing Units (GPUs). The processor may execute logic in the form of a software program. The computer system may include a memory including volatile and nonvolatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a system for optimising a cellular network;
FIG. 2 shows a flowchart of a method for optimising the cellular network; and
FIG. 3 shows a schematic diagram of data used in the method of figure 2.

It should be noted that the figures are illustrated for simplicity and are not necessarily drawn to scale. Like features are provided with the same reference numerals.

### Detailed description of the preferred embodiments

The system and method can provide several enhancements to a cellular (telecommunications) network that provides data services using a plurality of over-the-air protocols. This enables more users to access data services using higher bandwidth telecommunication protocols for more of the time. A further positive effect is to enable the identification of priority areas for deployment of new 4G (and 5G and beyond) nodes (e.g., base stations or gNBs) by identifying clusters of users with that have 4G (or higher) enabled devices but who do not have good access to 4G (or 5G) network data services.

This identification is achieved using information generated during the process of providing data services to users in a particular area. In some locations devices that are able to interact with the cellular network using a higher or highest bandwidth telecommunication protocols are not able to make use of these higher performance data services because there is a lack of such nodes or base stations (i.e., those that can provide 4G or 5G services) in that particular area or location or within a particular radio range.

There is a need to more reliably identify these particular areas and locations in order to prioritise the deployment of higher bandwidth telecommunication protocols nodes, to fix faults, to make network parameter or configuration changes or take other action in order to improve the provision of higher bandwidth telecommunication protocol data services to a greater number of devices and users in those identified areas and the cellular network as a whole. This may be done immediately (e.g., when configuration changes can be made remotely) or achieved over a longer time frame.

There are different ways in which data may be gathered to make such determinations and to determine particular nodes that require fixing, changing and/or upgrading. Applications such as NetPerform (RTM) and NetScout (RTM) probes allow information to be processed for the method a system to be aware of the technology being used by particular devices in particular locations. NetPerform and NetScout can read historic or real-time call records (e.g., call data records - CDRs) that include location or cell site information, user or handset identities, volume of data transmitted and other information. Each user or device may be assigned a percentage or amount of traffic generated in using each type of technology or bandwidth telecommunications protocol (e.g., 2G, 3G, 4G and 5G) over a time period. The users those whose percentage of traffic in 4G/5G is between is 1% and 50% (or other suitable percentages) in that time period are identified. This provides a set of users and/or devices that have 4G/5G enabled devices (determined because their data traffic using these systems is greater than zero) but are not able to connect to a higher or highest bandwidth telecommunications protocol or network (e.g., 4G or 5G) for over half (or other proportion) of their data requirements. The location of cell sites where this is of greatest concern are also identified from these data. This generates information indicating priority locations and areas that can be flagged as having at or beyond a threshold number of such users without good connectivity (e.g., at or above a certain performance level).

The system and method determine the technology capabilities of handsets in an area, e.g., whether or not they are 2G, 3G, 4G, or 5G (or beyond) compatible. The system and method may then decide or provide information informing where to fixed faults, change configuration parameters and/or upgrade infrastructure in order to most effectively utilise cellular network resources. For example, if there are 80% of users with a 4G handset in an area without any operating 4G masts then that area may be prioritised for fault fixing and/or hardware upgrades.

Most users may have a 4G or 5G handset (and cellular plan enabling them to use such networks) but in some locations they may not have the best experience for that particular handset or device because 4G or 5G gNBs or nodes are not functioning and/or not deployed. The system and method can facilitate the prioritisation and deployment of new 4G or 5G nodes or may fix faults or redistribute network resources to where the most users or devices can use these resources to most effect.

The information available and gathered by NetPerform or NetScout probes provides location and the technology information (higher or lower bandwidth telecommunication protocol) regarding the data connection properties of users and devices. For a specific period of time, for example a week or a month, each user may be assigned a percentage of data traffic generated in each technology (2G, 3G, 4G and 5G). Alternatively, absolute values may be used. This may be based on the user identifier or MSISDN within call records. Users having particular data properties are selected. In an example implementation, this may be those users select from all of those having percentage of their data traffic in 4G/5G between 0.1 or 1% (i.e., above zero to exclude those users not able to access 4G or 5G at all) and 50%. Other ranges may be used.

This list or set of users have suitable hardware (e.g., a 4G or 5G enabled handset) but may be considered as not having the best experience interacting with the network because at least half (50%) of their data communications does not use the highest bandwidth or quality telecommunications protocol or technology (e.g., a 4G or a 5G network).

Once these users are identified then particular (or the most) problematic nodes, cell sites, and/or base stations are identified. This is done by finding the most used cell site for each of the users in the list (in terms of data usage) of users with sub-optimal experience (i.e., below a certain proportion of data communications at the highest bandwidth telecommunications protocol or bandwidth telecommunications protocol at or above a certain level). In other words, this finds the cells sites for each of these users that provide the highest amount of data to those users (at any protocol). In a simplified example, a user is identified from call records as receiving less than 50% of their total data in a week using 4G or 5G (but at least some of the data is received using this technology). The user interacted with only three cell sites during that week. Cell site A provided 20% of the user's data requirements. Cell site B provided 45% of the user's data requirements. Cell site C provided 35% of the user's data requirements. Therefore, cell site B is flagged or identified as having a potential issue, fault, problem, or lack of infrastructure. There may be other ways to flag such underperforming cell sites for these identified users. For example, both cell sites B and C may be identified because they both provide greater than 30% of data services to the device (or another predetermined and/or adjustable proportion or volume of data).

In some example implementations, grouping users by node and verifying that in the base station where the node is located a 4G network is faulty or not present then a list of base stations where 4G or 5G nodes are not located or operational may be achieved. There may be further processing of the data to ensure that statistically significant results are being acted on. A minimum percentage or proportion of traffic on the 2G/3G network or minimum number of connected mobile devices may be configured and set to avoid spurious or non-statistically significant results. These configuration parameters may be adjusted over time (e.g., seasonally), for different cellular networks or set for particular locations.

For example, a minimum of 100 users may be required in the results and using the data network of a particular node or cell site. In these examples, different generations of mobile networks are described as different communication protocols or technologies. These include 2G, 3G, 4G and 5G but others may be used.

In these examples, the 2G and 3G (and even 1G) technologies or communication protocols are the lowest or lower bandwidth communication protocols and the 4G and/or 5G are the higher or highest bandwidth communication protocols as these have higher throughputs and performance than the lower generation technologies. However, as further generations and advances are made then the scale may change and eventually, 4G and 5G may also be considered as being lower bandwidth communication protocols when improved technologies are developed and deployed.

The system and method are not limited to a fixed set of technologies or communication protocols. Furthermore, there may be different bandwidth communication protocols made available within the same generation technologies. Provided that it is possible to differentiate the particular sub-protocol used in such a telecommunications system (and recorded as a record or otherwise) then the system and method can be used to improve the provision and efficiency of the higher bandwidth communication protocol in such systems as well.

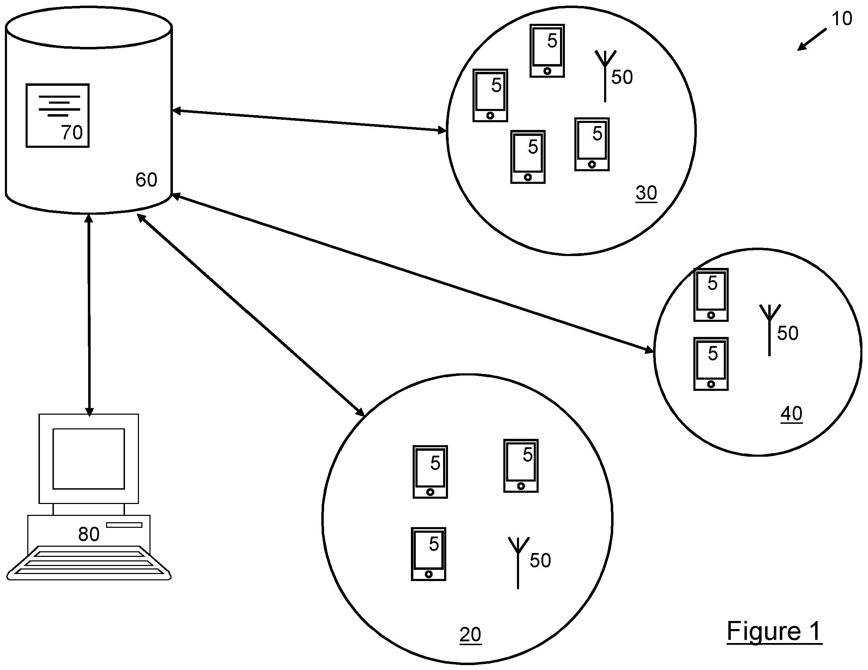

Figure 1 shows a schematic diagram of a system 10 that improves network optimisation. In this figure, several base stations 50 are shown serving three separate areas 20, 30, 40. These base stations 50 are located at cell sites that serve different numbers of mobile devices 5. When a mobile device receives services from the cellular network, a call detail record (CDR) 70 is created. These CDRs 70 are stored in database 60 within a node of the cellular network.

The CDRs 70 may be analysed as they are created or retrieved from the database 60 in order to analyse how mobile devices 5 access the cellular network and the particular details of these network interactions. A server 80 can access the CDRs 70 from database 60 in carrying out processing on these data either in real time or at intervals. The server 80 may be located within the cellular network or be remote from it. Furthermore, the server 80 may be a virtual server operating in the cloud, for example.

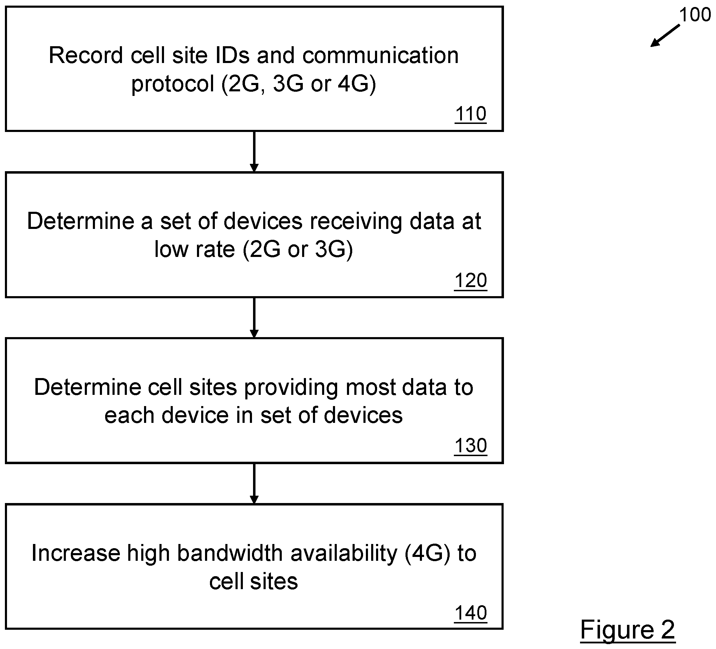

Figure 2 shows a flowchart of a method 100 operating within the system 10 described with reference to Figure 1. At step 110 of this method 100, records are created (CDRs 70) as the plurality of devices 5 obtain data services from one or more cell sites of the cellular network. These records include a cell site identifier and which have two or more communication protocols is used to provide data services to each device of the plurality of devices 5. The base stations 50 within each cell site may provide different technology communication protocols and some of these will be of higher bandwidth than others. Some base stations 50 may provide more than one communication protocol whilst others are limited to a single (e.g. lower bandwidth) communication protocol. For example, the communication protocols may be 2G, 3G, 4G and/or 5G.

Therefore, the CDRs 70 build up a dataset that is stored in database 60 describing which particular mobile devices 5 receive data from base stations 50 and at the particular communication protocol that was used. Furthermore, the amount of data received and/or transmitted to or from the mobile devices is also recorded in these CDRs 70.

The method 100 operates over a particular time period and so CDRs 70 generated within that particular time period (e.g., a week or a month) are retrieved by a server 80 from database 60. A process within the server 80 determines which mobile devices 5 within the cellular network obtain data services using a communication protocol other than a high bandwidth communication protocol or the highest bandwidth communication protocol (e.g. 4G or 5G). A set of mobile devices 5 that obtained above a particular threshold amount of data or percentage of data protocol over this time period using a communication protocol other than at the higher or highest bandwidth communication protocol is determined at step 120.

For this set or subset of mobile devices 5 a determination is made regarding which cell site or base station 50 provided the most data out of all cell sites that provided any data to a mobile device 5 to each of these mobile devices in this subset at step 130. This may or may not be a majority of data provided to each mobile device 5 over the time period.

This provides a good indication of cell sites or base stations 50 that contribute to low performance in the cellular network and are used more than other low performing cell sites. Therefore, at step 140, the availability of higher or highest bandwidth communication protocol technology is added to or increased to those identified cell sites at step 140.

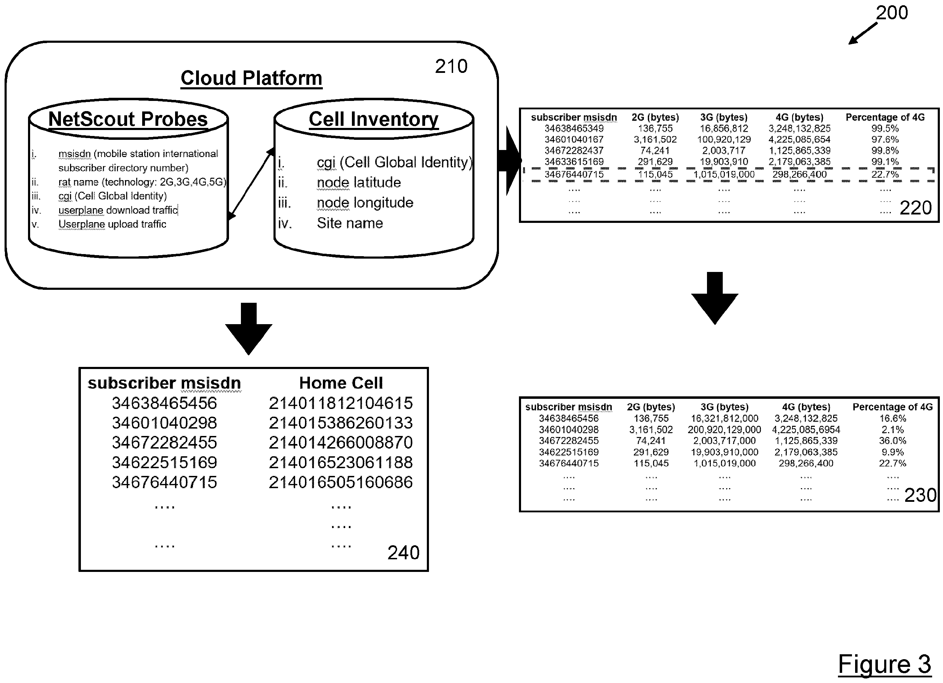

Figure 3 shows a schematic diagram of example data used within the method 100 described with reference to Figure 2. Figure 3 shows how the data are processed in the form of a dataflow 200. A cloud platform 210 hosts the server (in this example a virtual server) 80. The cloud platform 210 also hosts the database 60, which stores the cell inventory of CDRs 70. In this example implementation, the data are retrieved by NetScout probes although other data services may be used.

The generated CDRs 70 are processed to format the data to identify a breakdown of mobile data volumes for each communication protocol in the cellular network (2G, 3G and 4G in this example). In this example, the highest bandwidth communication protocol is 4G. As can be seen from the formatted data 220, the final subscriber MSISDN in this list only obtained 22.7% of its total data consumption using 4G (the highest bandwidth communication protocol) whilst the remaining subscriber MSISDNs (a proxy for devices 5) obtained their data services above 90% at 4G. The subscriber MSISDN identifies the particular mobile device 5 as this relates to the SIM, UICC, or subscriber identifier of that device 5.

One mobile device 5 (identified by MSISDN) has received a low percentage of its data services at a communication protocol other than 4G and is identified as subscriber 34676440715 in this example. Therefore, this mobile device 5 is added to a list of similar mobile devices 5 also breaching this threshold. Further processing is carried out on the data relating to this set of mobile devices 5.

In particular, the cell site or base station 50 that provided this particular mobile device 5 with either a majority of its data or was the most active cell site for this particular mobile device 5 (a highest volume of data out of all base stations 50 that provided any data service to the mobile device 5) is determined. This is done for each mobile device 5 or MSISDN that is determined as receiving a low percentage of 4G data services (below a particular threshold). In most circumstances, these are the home cell sites for the mobile device 5 but this may not always be the case, especially if a large proportion of data services are provided to the mobile device 5 outside of the home (e.g., the subscriber may utilise a large volume of data services while on vacation or at a work location).

In the example shown in Figure 3, a particular home cell is identified for the above-mentioned MSISDN, and this is identified as having identifier 214016505160686 in this example.

These sub-performing cell sites or base stations 50 are identified and provided as a list or data output. Different types of actions can result following identification of these cell sites or base stations 50. These can include automatic procedures for improving performance, software or configuration changes that may be automated or manual, scheduling or re-scheduling maintenance plans, and/or hardware upgrades, for example.

In an example implementation, a list or set of subscribers and/or mobile devices 5 is generated that have received a proportion of their data service using 4G technology between 0.1% and 50% (an example threshold). Records over a particular time period are considered during this process. All data consumption (download and/or upload) may be included. The system then determines the most used cell site for each mobile device 5 in the set. This cell site or base station 50 may be described as each subscriber's home cell and may be close to or provide cellular service to the subscriber's home location. In this context, the home cell is the cell site where the subscriber received the highest amount of data services for the particular time period. Within the group of identified home sites providing the most data services to mobile devices that received poor higher or highest bandwidth coverage (4G or 5G), a priority list for finding faults and/or upgrading hardware and/or software may be generated. For example, this may be based on the level of slow bandwidth data services provided to mobile devices 5. Levels at or above 75% for the amount of slow data provided, may have the highest priority, for example.

The system and method 100 may be used to prioritise upgrades to the hardware of particular cell sites and ensure that the overall effectiveness on the cellular network of such work is maximised. The system method 100 may also be able to find faults automatically and change configuration parameters more quickly and efficiently. In any case, the system and method 100 ensure that network capabilities more closely match the capabilities of the devices that access the network. Therefore, this provides a more robust and efficient network that uses resources in a more optimised way.

The system and method 100 may also be used to ensure that service key performance indicators (KPIs) meet the required values and scores. This is because the telecommunications system may be managed in order to identify and rectify vulnerabilities or faults in the network. This may include service failures as well as developing faults.

Such problems may be indicated by finding a high number of mobile devices 5 (e.g., over certain threshold or percentage) that obtain data services within the cellular network that can only access between 0.1% and 50% (for example) of their data from 4G (or above) enabled cell sites. This may contribute to measurements assigned as No service Time and Limited-Service KPIs (i.e., within the NetPerform App). Optimising, providing and fixing faults in 4G coverage, where it is most required using the described method 100 and system, reduces these poor KPI scores when using the same system resources.

There are different ways in which individual cell sites or base stations 50 may be changed when they are identified as requiring improvement in method 100. In an example implementation, this may be achieved using. Self-organizing network (SON) systems and techniques. SONs are intelligent management and control units for cellular networks that can execute particular tasks. These tasks include but are not limited to:
Planning. SON support the identification of sites that needs or lack 4G (or higher) coverage. The method 100 may be integrated into such a SON in order to identify locations where 4G subscribers have no or very poor 4G service and where making such changes will have the greatest effect. This method 100 may form part of a module of the SON that considers network topology (site locations and configuration, site coordinates, implemented technologies and carriers) and use user plane traffic from probes to detect locations with poor 4G performance. The module gives planning recommendations as an output. Certain rules may also be applied including:
a. The location where there are 4G enabled subscribers having the most data traffic using 2G/3G and where there is no available 4G base station 50, then the recommendation is to deploy one or more 4G node(s).
b. The location where we have 4G enabled subscribers having the most data traffic using 2G/3G and where 4G is already available then:
   i. If there are no low frequencies then the solution or recommendation may be to deploy LTE700 or LTE800; and/or
   ii. If there are low frequencies, then the solution or recommendation (automated or otherwise) may be to increase the number of nodes (deployment grid may require a denser mesh).

These outputs may be ingested into a deployment module. A benefit of incorporating the method 100 and system into a network planning module is that current SON solutions can supply a planning tool, which may be more focused on coverage simulations based on measurement reports from mobile device (e.g., UEs). However, replacing this with the present method 100 and system is simpler because it uses probes that are vendor agnostic, and the algorithm is plain (it does not require very complex processing capabilities and so it may be faster and more efficient).

Deployment. This may include data preparation and automatic site integration for both activation and commissioning.

Maintenance. Maintenance may be implemented using self-check and fault selfdiagnosis. Improvements can be made in coordinated optimisation of network and service availability. For example, when a site is down because of some hardware or power supply problem, antennae from neighbourhood sites may be automatically adapted (e.g., beam steering or have power increases applied) in order to recover service as much as possible. This automated action may be used to increase the availability of the higher bandwidth communication protocol at one or more of the determined cell sites or locations.

Optimisation. This may include parameter setting automation, neighbour relationships maintenance, load balancing, etc.

As will be appreciated by the skilled person, details of the above embodiment may be varied without departing from the scope of the present invention, as defined by the appended claims.

For example, the cell sites may be base stations, clusters of base stations or overlapping areas served by a number of base stations. The telecommunication protocols (lower, lowest, higher and highest bandwidth) may also be described in terms of technology generation. In general, 4G base stations will provide a higher bandwidth than 3G base stations. Therefore, the actual bandwidth provided and recorded in each CDR does not need to be measured but may be inferred from the base station type used to provide the data services. Alternatively, the actual bandwidth (or other performance parameters) may be measured and recorded in order to provide greater accuracy.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for optimising a cellular network that provides data services to a plurality of devices using two or more data communication protocols, the method comprising the steps of:
as the plurality of devices obtain data services from one or more cell sites of the cellular network, recording data indicating a cell site identifier and which of the two or more communication protocols is used to provide the data services to each device of the plurality of devices, wherein the two or more communication protocols comprise a higher bandwidth communication protocol and a lower bandwidth communication protocol;
determining a set of devices of the plurality of devices that obtain greater than a threshold proportion of data over a time period using a communication protocol other than the higher bandwidth communication protocol;
determining a cell site providing a highest volume of data during the time period for each device in the determined set of devices; and
increasing the availability of the higher bandwidth communication protocol at one or more of the determined cell sites.

2. The method of claim 1, wherein increasing the availability of the higher bandwidth communication protocol at the one or more of the determined cell sites comprises changing system parameters for the one or more determined cell sites.

3. The method according to any previous claim, further comprising the step of excluding cell sites having less than a predetermined number of devices that obtain less than the threshold proportion data over the time period using a communication protocol other than the higher bandwidth communication protocol.

4. The method according to any previous claim, wherein the higher bandwidth communication protocol is 4G or 5G.

5. The method according to any previous claim, wherein the threshold proportion of data is any value between 35% and 65% and preferably 50%.

6. The method according to any previous claim further comprising the step of excluding devices from the set of devices that obtain no data during the time period using the higher bandwidth communication protocol.

7. The method according to any previous claim, wherein the step of determining the cell site providing the highest volume of data during the time period for each device further comprises determining that the cell site either lacks functionality to provide the higher bandwidth communication protocol or determining that this functionality is degraded.

8. The method according to any previous claim, wherein increasing the availability of the higher bandwidth communication protocol at the one or more of the determined cell sites comprises changing hardware at the one or more of the determined cell sites.

9. The method according to any previous claim, wherein the step of recording the data further comprises:
exporting the data from one or more database tables storing call records of the plurality of devices.

10. The method of claim 9, wherein the determining steps further comprises:
processing the exported data to generate a table of subscriber identifier, data amount for each communication protocol used to download data in the time period, and a proportion of downloaded data in the time period using the higher bandwidth communication protocol.

11. The method according to claim 9 or claim 10, wherein the data are exported from data probes into a core network of the cellular network.

12. The method according to any previous claim, wherein the step of increasing the availability of the higher bandwidth communication protocol at the one or more of the determined cell sites further comprises the step of fixing one or more faults at the one or more of the determined cell sites.

13. The method of claim 12, wherein the one or more faults are hardware faults, software faults, and/or configuration faults.

14. A computer program comprising program instructions that, when executed on a computer cause the computer to perform the method of any previous claim.

15. A telecommunications network having means adapted to execute the steps of the method of any of claims 1 to 13.
